# EUROPEAN PATENT SPECIFICATION

(11) **EP 3 450 205 B1**
(45) Date of publication and mention of the grant of the patent: **18.03.2020**
(21) Application number: 18190997.9
(22) Date of filing: 27.08.2018
(51) Int. Cl.: B60C 1/00, C08L 9/06, B60C 11/00

(54) **PNEUMATIC TIRE**
LUFTREIFEN
PNEUMATIQUE

(30) Priority: 30.08.2017 US 201762551978 P; 12.10.2017 US 201715782138
(43) Date of publication of application: 06.03.2019
(73) Proprietor: The Goodyear Tire & Rubber Company, Akron, OH 44316 (US)
(72) Inventor: BROEMMEL, Antonia Felicitas, 60323 Frankfurt am Main (DE); EDY, Hartono, 63457 Hanau (DE); SCHREYER, Dominik Helmut, 63450 Hanau (DE); MAILAENDER, Lisa, 65510 Idstein (DE); KAES, Christian Jean-Marie, 9184 Schrondweiler (LU); SANDSTROM, Paul Harry, Cuyahoga Falls, OH 44223 (US); JADIN, Pierre Marc Ghislain, 4190 Vieuxville (BE)
(74) Representative: Kutsch, Bernd

(56) References cited:
- EP-A1- 3 103 655
- DE-A1-102011 055 966
- JP-B2- 4 762 562

## Description

### Background of the Invention

It is highly desirable for tires to have good wet skid resistance, low rolling resistance, and good wear characteristics. It has traditionally been very difficult to improve a tire's wear characteristics without sacrificing its wet skid resistance and traction characteristics. These properties depend, to a great extent, on the dynamic viscoelastic properties of the rubbers utilized in making the tire.

In order to reduce the rolling resistance and to improve the treadwear characteristics of tires, rubbers having a high rebound have traditionally been utilized in making tire tread rubber compounds. On the other hand, in order to increase the wet skid resistance of a tire, rubbers which undergo a large energy loss have generally been utilized in the tire's tread. In order to balance these two viscoelastically inconsistent properties, mixtures of various types of synthetic and natural rubber are normally utilized in tire treads. For instance, various mixtures of styrene-butadiene rubber and polybutadiene rubber are commonly used as a rubbery material for automobile tire treads. However, improvements in rolling resistance often occur in tandem with a reduction in wet traction, and vice versa. There is a continuing need, therefore, to develop tread having both good rolling resistance and wet traction.

EP-A-3 103 655 describes a rubber composition for a tire tread having a cap/base construction. The rubber composition comprises natural and/or synthetic polyisoprene, silica and a liquid polybutadiene having a weight average molecular weight in a range of from 500 to 12000 g/mol.

DE-A1-10 2011 055 966 describes a rubber composition for use with a pneumatic tire, the rubber composition comprising natural polyisoprene, synthetic polyisoprene, a plasticizer, silica and mercaptosilane. The plasticizer may be liquid polybutadiene rubber.

JP-4-762562 B2 describes a rubber composition for a pneumatic tire. The rubber composition comprises liquid polymers having a number average molecular weight in a range of from 1000 to 100000.

### Summary of the Invention

The invention relates to a tire in accordance with claim 1.

Dependent claims refer to preferred embodiments of the invention.

In a preferred aspect, the present invention is directed to a pneumatic tire comprising a tread, the tread comprising a radially outermost, ground contacting tread cap and a tread base disposed radially inward of and underlying the tread cap, the tread cap comprising a central cap zone and lateral cap zones, the lateral cap zones located axially adjacent to the central cap zone and on axially opposite sides of the central cap zone, the central cap zone comprising a first rubber composition and the lateral cap zones comprising a second rubber composition, the first rubber composition comprising a diene elastomer, silica, a blocked mercaptosilane, a resin serving as traction resin, and a relatively low molecular weight polybutadiene functionalized with a hydroxyl functional group; the second rubber composition comprising a diene elastomer, silica, a blocked mercaptosilane, and a relatively low molecular weight polybutadiene functionalized with an alkoxysilane functional group.

Preferably, the tread cap comprises the central cap zone and two lateral cap zones disposed axially outward from the central cap zone.

### Brief Description of the Drawings

Figure 1 shows a first embodiment of a cross-sectional view of a cured pneumatic tire tread layout.
Figure 2 shows a second embodiment of a cross-sectional view of a cured pneumatic tire tread layout.
Figure 3 shows a third embodiment of a cross-sectional view of a cured pneumatic tire tread layout.
Figure 4 shows a fourth embodiment of a cross-sectional view of a cured pneumatic tire tread layout.

### Detailed Description of Example Embodiments of the Invention

There is disclosed a pneumatic tire comprising a tread, the tread comprising a radially outermost, ground contacting tread cap and a tread base disposed radially inward of and underlying the tread cap, the tread cap comprising a central cap zone and lateral cap zones, the lateral cap zones located axially adjacent to the central cap zone and on axially opposite sides of the central cap zone, the central cap zone comprising a first rubber composition and the lateral cap zones comprising a second rubber composition, the first rubber composition comprising a diene elastomer, silica, a blocked mercaptosilane, a traction resin, and a relatively low molecular weight polybutadiene functionalized with a hydroxyl functional group; the second rubber composition comprising a diene elastomer, silica, a blocked mercaptosilane, and a relatively low molecular weight polybutadiene functionalized with an alkoxysilane functional group.

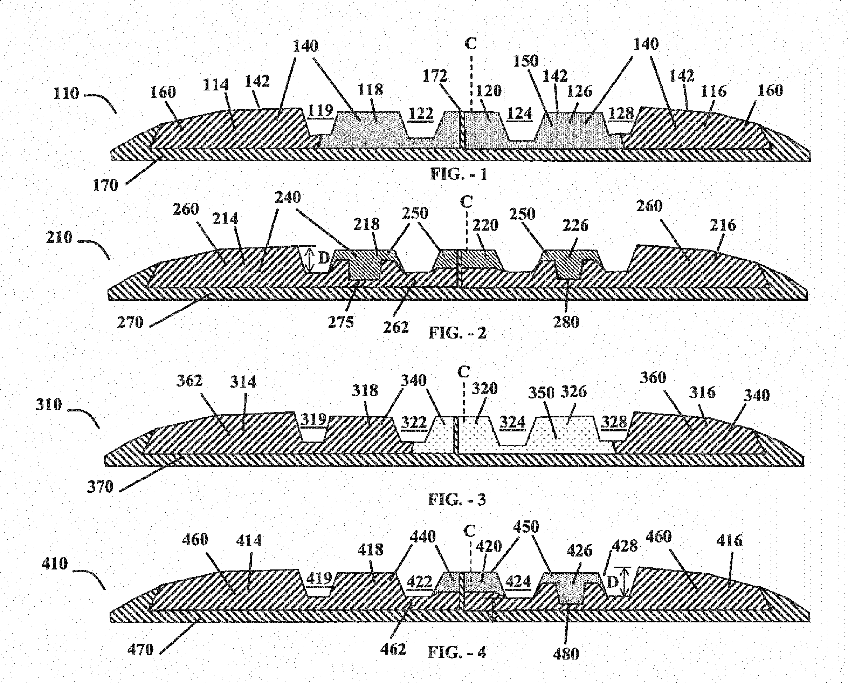

A cross-sectional view of a cured pneumatic tire tread layout 110 is shown in Figure 1. The pneumatic tire may be formed of typical tire components known to those skilled in the art, such as, but not limited to, inner liner (not shown), annular beads (not shown), sidewall (not shown), apex (not shown), plies (not shown), and belt package (not shown). The tire tread 110 has a first and second shoulder blocks 114, 116 forming the shoulder regions of the tire. The tire tread 110 may further comprise at least two ribs 118,120, preferably three ribs 118, 120, 126. The invention is not limited to ribs, and may alternatively be tread blocks, preferably circumferentially aligned tread blocks. Ribs 118, 126 are separated from shoulder blocks 114, 116 with grooves 119, 128 respectively. Ribs 118, 120,126 are separated from each other with grooves 122, 124.

The tire tread layout 110 comprises a tread cap 140 (or tread cap layer 140) and a tread base 170 (or tread base layer 170). Tread cap 140 comprises a central cap zone 150 and two lateral cap zones 160 disposed axially outward from central cap zone 150. The caps zones 150, 160 are of different rubber compositions. The tread cap 140 includes a radially outermost, ground contacting surface 142 disposed along the radially outermost extents of the cap zones 150, 160. The tread base 170 at least partially underlies the tread cap 140 and is disposed radially inward of the tread cap 140. A conductive zone 172 is continuous with the tread base 170. The conductive zone 172 extends from the tread base 170 radially outward through the central cap zone 150 to the ground contacting surface 142 and provides a conductive path for static electricity dissipation from the tire carcass (not shown) to ground.

The central cap zone 150 is formed of a rubber composition selected for good traction properties, as described in more detail, below.

The lateral cap zones 160 are formed from a rubber composition suitable for high rolling resistance properties, as described in more detail, below.

The embodiment shown in Figure 1 is a symmetric tread, in that the tread is identical on either side of axially center line C with the lateral cap zones 160 disposed axially symmetrical about center line C, and the central cap zone 150 disposed axially symmetrical about center line C.

Referring now to Figure 2, a second embodiment of the tread 210 is shown is cross-section. In the embodiment shown in Figure 2, a tread cap 240 (or tread cap layer 240) includes central cap zones 250 disposed in radially outermost in ribs 218, 220, 226 and a lateral cap zone 260 disposed in shoulder blocks 214, 216. The cap zone 260 also extends radially outward from the tread base 270 (or tread base layer 270) and includes an undertread region 262 underlying the central cap zones 250, extending axially between shoulder blocks 214, 216 and disposed radially between the tread base 270 and the central cap zones 250. The tread base 270 retains the features described for tread base 170 previously.

The undertread region 262 includes one or more notched areas 275, 280 that extend radially outward into ribs 218, 226. During use, as tire tread 210 wears down towards the non-skid depth D, the notched areas 275, 280 containing the wet traction compound of central cap zone 250 remain in contact with the road. This notched feature allows the tire to retain wet traction due to the wet traction compound maintaining contact with the road. The embodiment shown in Figure 2 is a symmetric tread, in that the tread is identical on either side of axially center line C.

Referring now to Figure 3, an asymmetric version of the tread of Figure 1 is shown as tread 310. A tread cap 340 (or tread cap layer 340) includes asymmetric lateral cap zones 360, 362 and an asymmetric central cap zone 350. The lateral cap zone 362 extends over a shoulder block 314 and a rib 318 and fully encompasses a groove 319, while the lateral cap zone 360 is only in the shoulder block 316. The central cap zone 350 includes ribs 320, 326 and extends asymmetrically about the center line C in the axial direction, bounded axially by grooves 322 and 328 and fully encompassing groove 324. The tread base 370 retains the features described for tread base 170 previously.

Referring now to Figure 4, an asymmetric version of the tread of Figure 2 is shown as tread 410. In the embodiment shown in Figure 4, a tread cap 440 includes asymmetric central cap zones 450 disposed in radially outermost in ribs 420, 426 and asymmetric lateral cap zone 460 disposed in shoulder blocks 414, 416. A lateral cap zone 460 extends over shoulder block 414 and rib 418 and fully encompasses groove 419, and also in shoulder block 416. The lateral cap zone 460 also extends radially outward from tread base 470 and includes an undertread region 462 underlying central cap zones 450, extending axially between shoulder blocks 414, 416 and disposed radially between the tread base 470 and the central cap zones 450. The central cap zone 450 includes ribs 420, 426 and extends asymmetrically about center line C in the axial direction, bounded axially by grooves 422 and 428 and fully encompassing groove 424. The tread base 470 retains the features described for tread base 170 previously.

The undertread region 462 includes a notched area 480 that extends radially outward into rib 426. During use, as tire tread 410 wears down towards the non-skid depth D, the notched area 480 containing the wet traction compound of the central cap zone 450 remains in contact with the road. This notched feature allows the tire to retain wet traction due to the wet traction compound maintaining contact with the road.

The tire of the present invention has the compound for the lateral cap zones 160, 260, 360, 362, 460 selected for low rolling resistance properties, in one case indicated by measurement of rebound at 100°C. The rolling resistance is largely determined by the volume of the lateral cap zone.

The compound for the central cap zones 150, 250, 350, 450 is selected to improve wet traction properties, in one case indicated by a measurement of rebound at 23°C.

A tire's ability to stop on wet surfaces, also known as wet performance or wet grip, is influenced by the contact area of the tire tread with the road.

The tread cap zones may be co-extruded.

The rubber composition of the central cap zone, or first rubber composition, comprises a diene elastomer, silica, a blocked mercaptosilane, a resin (serving as traction resin), and a relatively low molecular weight polybutadiene functionalized with a hydroxyl functional group.

The rubber composition of the lateral cap zone, or second rubber composition, comprises a diene elastomer, silica, a blocked mercaptosilane, and a relatively low molecular weight polybutadiene functionalized with an alkoxysilane functional group.

Preferably, the first and second rubber compositions comprise as the diene elastomer, from 70 to 90 phr of at least one styrene-butadiene rubber, and from 10 to 30 phr of a natural rubber or synthetic polyisoprene.

Preferably the styrene-butadiene rubber comprises a first styrene-butadiene rubber and a second styrene-butadiene rubber.

Preferably at least one of the first and second styrene-butadiene rubber is functionalized with a alkoxysilane group and at least one group selected from sulfur containing functional group and primary amino functional groups.

In one embodiment as diene elastomer for the first and second rubber composition, the diene elastomer includes A) from 40 to 60 phr of a first styrene-butadiene rubber having a Tg in a range of from -70°C to -5°C and functionalized with a alkoxysilane group and sulfur containing functional group, B) from 20 to 30 phr of a second styrene-butadiene rubber containing from 25 to 45 percent by weight of styrene, a vinyl 1,2 content of 20 to 60 percent by weight based on the rubber weight, and having a Tg in a range of from -30°C to -5°C, and C) from 10 to 30 phr of a natural rubber or synthetic polyisoprene.

Preferably, the first styrene-butadiene rubber has a Tg in a range of from -40 to -10°C.

Preferably the rubber compositions of the central cap zone and lateral cap zones include from 40 to 60 phr of a first styrene-butadiene rubber functionalized with an alkoxysilane group and a functional group selected from sulfur containing functional groups and amino functional groups. Suitable sulfur containing groups include thiol, thioether, thioester, sulfide, or sulfanyl group. Suitable amino functional groups include primary, secondary, and tertiary amino groups. Additional examples of rubbers which may be used include solution polymerized styrene-butadiene functionalized with groups such as alkoxy including monoalkoxy, dialkoxy, and trialkoxy, silyl, thiols, thioester, thioether, sulfanyl, mercapto, sulfide, and combinations thereof. Such functionalized solution polymerized polymers may be functionalized at the polymer chain ends for example via functional initiators or terminators, or within the polymer chains for example via functional monomers, or a combination of in-chain and end-of-chain functionalization. Specific examples of suitable functional solution polymerized polymers include those described in US-B-8,217,103 and US-B-8,569,409 having alkoxysilyl and sulfide (i.e. thioether) functionality. Such thiol functionality includes thiol or sulfanyl functionality arising from cleavage of sulfur containing groups during compound processing, such as for example from thioesters and thioethers.

In one embodiment, the styrene-butadiene rubber is obtained by copolymerizing styrene and butadiene, and characterized in that the styrene-butadiene rubber has a thiol group and an alkoxysilyl group which are bonded to the polymer chain. In one embodiment, the alkoxysilyl group is an ethoxysilyl group.

The thiol group may be bonded to any of a polymerization initiating terminal, a polymerization terminating terminal, a main chain of the styrene-butadiene rubber and a side chain, as long as it is bonded to the styrene-butadiene rubber chain. However, the thiol group is preferably introduced to the polymerization initiating terminal or the polymerization terminating terminal, in that the disappearance of energy at a polymer terminal is inhibited to improve hysteresis loss characteristics. The thiol group may further exist as a blocked thiol (also known as blocked mercapto group) having a protective functional group attached to the sulfur atom such as in a thioester or thioether, which is then cleaved to expose the thiol sulfur during rubber mixing.

Further, the content of the alkoxysilyl group bonded to the polymer chain of the (co)polymer rubber is preferably from 0.5 to 200 mmol/kg of (styrene-butadiene rubber. The content is more preferably from 1 to 100 mmol/kg of styrene-butadiene rubber, and particularly preferably from 2 to 50 mmol/kg of styrene-butadiene rubber.

The alkoxysilyl group may be bonded to any of the polymerization initiating terminal, the polymerization terminating terminal, the main chain of the (co)polymer and the side chain, as long as it is bonded to the (co)polymer chain. However, the alkoxysilyl group is preferably introduced to the polymerization initiating terminal or the polymerization terminating terminal, in that the disappearance of energy is inhibited from the (co)polymer terminal to be able to improve hysteresis loss characteristics.

The styrene-butadiene rubber can be produced by polymerizing styrene and butadiene in a hydrocarbon solvent by anionic polymerization using an organic alkali metal and/or an organic alkali earth metal as an initiator, adding a terminating agent compound having a primary amino group protected with a protective group and/or a thiol group protected with a protecting group and an alkoxysilyl group to react it with a living polymer chain terminal at the time when the polymerization has substantially completed, and then conducting deblocking, for example, by hydrolysis or other appropriate procedure. In one embodiment, the styrene-butadiene rubber can be produced as disclosed in US-B-7,342,070. In another embodiment, the styrene-butadiene rubber can be produced as disclosed in WO-A-2007/047943.

In one embodiment, the solution polymerized styrene-butadiene rubber is as disclosed in WO-A-2007/047943 and is functionalized with an alkoxysilane group and a blocked thiol, and comprises the reaction product of a living anionic polymer and a silane-sulfide modifier represented by the formula (R⁴O)ₓR⁴_{y}Si-R⁵-S-SiR⁴₃ wherein Si is silicon; S is sulfur; O is oxygen; x is an integer selected from 1, 2 and 3;y is an integer selected from 0, 1, and 2; x + y = 3; R⁴ is the same or different and is (C₁-C₁₆) alkyl; and R⁵ is aryl, and alkyl aryl, or (C₁-C₁₆) alkyl. In one embodiment, R⁵ is a (C₁-C₁₆) alkyl. In one embodiment, each R⁴ group is the same or different, and each is independently a C₁-C₅ alkyl, and R⁵ is C₁-C₅ alkyl.

The solution polymerized styrene-butadiene rubber preferably has a glass transition temperature in a range of from -70°C to -5°C., alternatively from -40 to - 10 °C.

A reference to glass transition temperature, or Tg, of an elastomer or elastomer composition, where referred to herein, represents the glass transition temperature(s) of the respective elastomer or elastomer composition in its uncured state or possibly a cured state in a case of an elastomer composition.

The Tg is determined as a peak midpoint by a differential scanning calorimeter (DSC) at a temperature rate of increase of 10ºC per minute, according to ASTM D7426 or equivalent.

Suitable styrene-butadiene rubbers functionalized with an alkoxysilane group and a thiol group are available commercially, such as Sprintan SLR 4602 from Trinseo.

The rubber compositions of the central cap zone and lateral cap zones preferably also contain from 20 to 30 phr of a second styrene-butadiene rubber, wherein the second styrene-butadiene rubber is solution-polymerized styrene-butadiene rubber (SSBR) with a bound styrene content of from 25 to 45 percent by weight, a vinyl 1,2 content of from 20 to 60 percent by weight based on the rubber weight, and a Tg in a range of from -30ºC to -5ºC.

As the second styrene-butadiene rubber, suitable solution polymerized styrene-butadiene rubbers may be made, for example, by organo lithium catalyzation in the presence of an organic hydrocarbon solvent. The polymerizations employed in making the rubbery polymers are typically initiated by adding an organolithium initiator to an organic polymerization medium that contains the monomers. Such polymerizations are typically carried out utilizing continuous polymerization techniques. In such continuous polymerizations, monomers and initiator are continuously added to the organic polymerization medium with the rubbery polymer synthesized being continuously withdrawn. Such continuous polymerizations are typically conducted in a multiple reactor system. Suitable polymerization methods are known in the art, for example as disclosed in US-A-4,843,120; US-A-5,137,998; US-A-5,047,483; US-A-5,272,220; US-A-5,239,009; US-A-5,061,765; US-A-5,405,927; US-A-5,654,384; US-A-5,620,939; US-A-5,627,237; US-A-5,677,402; US-A-6,103,842; and US-B-6,559,240.

As the second styrene-butadiene rubber, suitable solution polymerized styrene-butadiene rubbers are available commercially, such as Tufdene E680 SSBR from Asahi Chemical, SLF30H41-66C from The Goodyear Tire & Rubber Company, and F3438 from LG Chem.

Such solution polymerized styrene-butadiene rubber may be tin- or silicon-coupled, as is known in the art. In one embodiment, suitable SSBR may be at least partially silicon-coupled.

The rubber compositions of the central cap zone and lateral cap zones preferably also contain from 10 to 30 phr of a natural rubber or synthetic polyisoprene.

Such synthetic polyisoprene or synthetic cis 1,4-polyisoprene and natural rubber or cis 1,4-polyisoprene natural rubber are well known to those having skill in the rubber art.

The term "phr" as used herein, and according to conventional practice, refers to "parts by weight of a respective material per 100 parts by weight of rubber, or elastomer."

The rubber compositions of the central cap zone and lateral cap zones preferably also contain from 3 to 10 phr of a blocked mercaptosilane include blocked forms of mercapto alkylalkoxysilanes, such as mercaptopropyl triethoxysilane, mercaptopropyl trimethoxysilane, mercaptopropyl methyldimethoxysilane, mercaptopropyl methyldiethoxy silane, mercaptopropyl dimethymethoxysilane, mercaptoethyl triethoxysilane, and mercaptopropyl tripropoxysilane. In each case a blocking group may be bonded to the mercapto sulfur, such blocking group form thioesters -C(=O)-CₙH₂ₙ₊₁, where n is from 1 to 10, thioethers, or silylsulfide groups. In one embodiment, the blocking group is a octanoyl group forming a thioester, and the blocked mercaptosilane is S-octanoylmercaptopropyltriethoxysilane (otherwise known as 3-octanoylthio-1-propyltriethoxysilane) available at NXT from Momentive.

The rubber compositions of the central cap zone and the lateral cap zones preferably include a functionalized liquid polymer.

Suitable liquid polymer should have double bonds that can react with sulfur and the polymer matrix to form cross-links. Suitable liquid polymers are derived from conjugated diolefin (or diene) monomers. Such liquid polymers can also contain repeat units which are derived from other monomers which are copolymerizable with conjugated diolefin monomers. For instance, the liquid polymer can also contain repeat units which are derived from vinyl aromatic monomers, such as styrene. Polybutadiene rubber, polyisoprene rubber, styrene-butadiene rubber, isoprene-butadiene rubber, styrene-isoprene rubber and styrene-isoprene-butadiene rubber are some representative examples of polymers which can be used as the liquid polymer.

The liquid polymers are functionalized with at least one functional group including alkoxysilyl, hydroxyl, epoxy groups, amino, carboxyl, maleic groups, and maleimide groups. The liquid polymers may be functionalized at the polymer chain ends for example via functional initiators or terminators, or within the polymer chains for example via functional monomers, or a combination of in-chain and end-of-chain functionalization.

The liquid polymers are relatively low molecular weight rubbery polymers of conjugated diolefin monomers. These relatively low molecular weight rubbery polymers will also typically compris repeat units which are derived from one or more conjugated diolefin monomers. Such low molecular weight rubbers can also, of course, contain repeat units which are derived from other monomers which are copolymerizable with conjugated diolefin monomers. For instance, the low molecular weight rubbery polymer can contain repeat units which are derived from vinyl aromatic monomers, such as styrene. Low molecular weight polybutadiene rubber, low molecular weight polyisoprene rubber, low molecular weight styrene-butadiene rubber, low molecular weight isoprene-butadiene rubber, low molecular weight styrene-isoprene rubber and low molecular weight styrene-isoprene-butadiene rubber are some representative examples of low molecular weight rubbery polymers which can be modified to make the wetting agents of this invention.

The relatively low molecular weight rubbery polymer have a weight average molecular weight which is within the range of from 1000 to 25,000 g/gmol.

Preferably, the relatively low molecular weight rubbery polymer have a weight average molecular weight which is within the range of from 2000 to 15,000 g/gmol.

The weight average molecular weight Mw is measured with gel permeation chromatography (GPC) using polystyrene calibration standards, according to ASTM 3536.

GPC is a well-known method wherein polymers are separated according to molecular size, the largest molecule eluting first. The chromatograph is calibrated using commercially available polystyrene molecular weight standards. The detector used is an ultraviolet detector. The fraction of chains existing as mono chains is determined as the ratio of the areas under the GPC curve, i.e., (mono chain peak area)/(total area).

Preferably, the rubber compositions of the central cap zone and terminal cap zones include from 3 to 30 phr, alternatively 3 to 10 phr of functionalized liquid polymer.

Preferably, the rubber composition of the central cap zone includes from 3 to 30 phr, alternatively 3 to 10 phr of a polybutadiene functionalized with primary hydroxyl groups at each terminus and having a molecular weight Mw ranging from 1000 to 25000 g/gmol, preferably 1500 to 2500 g/gmol; and/or a Tg ranging from - 50°C to -20°C.

In one embodiment, the hydroxyl functionalized polybutadiene is Krasol LBH-P 2000 from Cray Valley.

Preferably, the rubber composition of the lateral cap zones includes from 3 to 30 phr, alternatively 3 to 10 phr of a polybutadiene functionalized with triethoxysilyl groups at each terminus and having a molecular weight Mw ranging from 1000 to 25000 g/gmol, preferably from 2000 to 4000 g/gmol; and/or a Tg ranging from -50 °C to -20 °C.

In one embodiment, the triethoxysilyl functionalized polybutadiene is available as Ricon 603 from Cray Valley.

The rubber composition of the central cap zone includes a resin.

The rubber composition of the lateral cap zone is preferably exclusive of a resin, such as hydrocarbon resins including coumarone-indene-resins, petroleum resins, terpene polymers and mixtures thereof. Small amounts of resin may alternatively be used, generally less than 5 phr.

Preferably, the rubber composition of the central cap zone includes from 3 to 10 phr of a resin selected from the group consisting of hydrocarbon resins, phenol/acetylene resins, rosin derived resins and mixtures thereof.

Representative hydrocarbon resins include coumarone-indene-resins, petroleum resins, terpene polymers and mixtures thereof.

Coumarone-indene resins are commercially available in many forms with melting points ranging from 10 to 160°C (as measured by the ball-and-ring method). Preferably, the melting point ranges from 30 to 100°C. Coumarone-indene resins are well known. Various analysis indicate that such resins are largely polyindene; however, typically contain random polymeric units derived from methyl indene, coumarone, methyl coumarone, styrene and α-methyl styrene.

Petroleum resins are commercially available with softening points ranging from 10°C to 120°C. Preferably, the softening point ranges from 30 to 100°C. Suitable petroleum resins include both aromatic and nonaromatic types. Several types of petroleum resins are available. Some resins have a low degree of unsaturation and high aromatic content, whereas some are highly unsaturated and yet some contain no aromatic structure at all. Differences in the resins are largely due to the olefins in the feedstock from which the resins are derived. Conventional derivatives in such resins include dicyclopentadiene, cyclopentadiene, their dimers and diolefins such as isoprene and piperylene. Copolymer resins of styrene and α-methyl styrene may also be used.

Terpene polymers are commercially produced from polymerizing a mixture of beta pinene in mineral spirits. The resin is usually supplied in a variety of melting points ranging from 10°C to 135°C.

Phenol/acetylene resins may be used. Phenol/acetylene resins may be derived by the addition of acetylene to butyl phenol in the presence of zinc naphthlate. Additional examples are derived from alkylphenol and acetylene.

Resins derived from rosin and derivatives may be used in the present invention. Gum and wood rosin have much the same composition, although the amount of the various isomers may vary. They typically contain about 10 percent by weight neutral materials, 53 percent by weight resin acids containing two double bonds, 13 percent by weight of resin acids containing one double bond, 16 percent by weight of completely saturated resin acids and 2 percent of dehydroabietic acid which contains an aromatic ring but no unsaturation. There are also present about 6 percent of oxidized acids. Representative of the diunsaturated acids include abietic acid, levopimaric acid and neoabietic acid. Representative of the monounsaturated acids include dextroplmaris acid and dihydroabietic acid. A representative saturated rosin acid is tetrahydroabietic acid.

Preferably, the rubber composition of the central cap zone includes from 3 to 10 phr of a polyterpene resin. Suitable polyterpene resins include Sylvares TRB 115 from Arizona Chemical.

The rubber composition preferably also includes from 10 to 25 phr of a processing oil.

Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

In one embodiment, in the first rubber composition, the sum of the amounts of processing oil, resin and relatively low molecular weight polybutadiene ranges from 10 to 45 phr.

In one embodiment, in the second rubber composition, the sum of the amounts of processing oil and relatively low molecular weight polybutadiene ranges from 10 to 45 phr.

The rubber composition preferably includes from 50 to 100 phr of silica.

In another embodiment, from 50 to 80 phr of silica may be used.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930).

The conventional silica may also be characterized by having a dibutylphthalate (DBP) absorption value in a range of 100 to 400, alternatively 150 to 300.

Various commercially available silicas may be used, such as, only for example herein, and without limitation, silicas commercially available from PPG Industries under the Hi-Sil trademark with designations 210 and 243; silicas available from Solvay, with, for example, designations of Z1165MP, Z165GR and Zeosil Premium 200MP; and silicas available from Degussa AG with, for example, designations VN2 and VN3.

Commonly employed carbon blacks can be used as a conventional filler preferably in an amount ranging from 1 to 10 phr. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

In one embodiment the rubber composition may optionally contain a conventional sulfur containing organosilicon compound. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

The amount of the optional sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarder, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

In one embodiment, the rubber compositions may include from 1 to 10 phr as a vulcanization modifier an α,ω-bis(N,N'-dihydrocarbylthiocarbamamoyldithio)alkane. Suitable α,ω-bis(N,N'-dihydrocarbylthiocarbamamoyldithio)alkanes include 1,2-bis(N,N'-dibenzylthiocarbamoyl-dithio)ethane; 1,3-bis(N,N'-dibenzylthiocarbamoyldithio)propane; 1,4-bis(N,N'-dibenzylthiocarbamoyldithio)butane; 1,5-bis(N,N'-dibenzylthiocarbamoyldithio)pentane; 1,6-bis(N,N'-dibenzylthiocarbamoyldithio)hexane; 1,7-bis(N,N'-dibenzylthiocarbamoyldithio)heptane; 1,8-bis(N,N'-dibenzylthiocarbamoyldithio)octane; 1,9-bis(N,N'-dibenzylthiocarbamoyldithio)nonane; and 1,10-bis(N,N'-dibenzylthiocarbamoyldithio)decane. In one embodiment, the vulcanization modifier is 1,6-bis(N,N'-dibenzylthiocarbamoyldithio)hexane available as Vulcuren from Bayer.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 80°C and 190°C. The appropriate duration of the thermomechanical working varies as a function of the operating conditions, and the volume and nature of the components. For example, the thermomechanical working may be from 1 to 20 minutes.

The rubber composition may be incorporated in a variety of rubber components of the tire. For example, the rubber component may be a tread (including tread cap and tread base), sidewall, apex, chafer, sidewall insert, wirecoat or innerliner. In one embodiment, the component is a tread.

The pneumatic tire of the present invention may be a race tire, passenger tire, aircraft tire, agricultural, earthmover, off-the-road or truck tire. In one embodiment, the tire is a passenger or truck tire. The tire may also be a radial or bias.

Vulcanization of the pneumatic tire of the present invention is generally carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

This invention is illustrated by the following examples. Unless specifically indicated otherwise, parts and percentages are given by weight.

### Example 1

In this example, the effect of a hydroxy-terminated polybutadiene on the performance of a tread compound is illustrated. Rubber compositions were mixed in a multi-step mixing procedure following the recipes in Table 1, with all amounts given in phr. Standard amounts of curatives were also included. Rubber compounds were then cured and tested for rolling resistance (RR) and wet braking performance, with results given in Table 2.

**Table 1**

| Sample No. | Reference | Example 1 | Example 2 |
|---|---|---|---|
| SBR¹ | 49 | 52 | 52 |
| SBR² | 30 | 27 | 0 |
| SBR³ | 0 | 0 | 33.75 |
| Natural Rubber | 21 | 21 | 21 |
| Silica⁴ | 70 | 74 | 74 |
| Carbon Black | 3 | 5 | 0 |
| Silane⁵ | 5.6 | 0 | 0 |
| Silane⁶ | 0 | 5.92 | 5.92 |
| Silane⁷ | 0 | 0 | 2 |
| Traction resin ⁸ | 0 | 4 | 4 |
| Liquid Polymer ⁹ | 0 | 7 | 7 |
| TDAE oil¹⁰ | 11.25 | 10.125 | 0 |
| Sunflower oil | 5 | 6.3 | 5.3 |

| | | | |
|---|---|---|---|
| ¹ Solution polymerized SBR with styrene content of 21% and 1,2-vinyl content of 50%, Tg = -23°C obtained from Trinseo as SLR4602. ² Solution polymerized SBR with styrene content of 34% and 1,2-vinyl content of 38%, Tg = -28 °C extended with 37.5 phr TDAE oil, obtained as Tufdene E680 from JSR. ³ Solution polymerized SBR with styrene content of 34% and 1,2-vinyl content of 38%, Tg = -22°C obtained from LG Chem as F3438. ⁴Zeosil Premium 200MP from Solvay ⁵ TESPD type silane coupling agent, as Si266 from Evonik. ⁶ S-octanoylmercaptopropyltriethoxysilane, as NXT* from Momentive ⁷ TESPD type silane coupling agent, 50% on carbon black as X50S from Evonik ⁸ Polyterpene resin, Tg = 70 °C, obtained as Sylvares TRB 115 from Arizona Chemicals. ⁹ Polybutadiene end functionalized with hydroxyl groups, Mw=2100, Tg = -35 °C, as Krasol LBH-P 2000 from Cray Valley ¹⁰ Includes extension oil and added oil | | | |

**Table 2**

| | Reference | Example 1 | Example 2 |
|---|---|---|---|
| RR | 100 | 103 | 107 |
| Wet braking | 100 | 108 | 107 |

As can be seen in Table 2, the overall compromise of wet braking and rolling resistance is improved with the compounds using hydroxy-terminated polybutadiene.

### Example 2

In this example, the effect of a alkoxysilane-terminated polybutadiene on the performance of a tread compound is illustrated. Rubber compositions were mixed in a multi-step mixing procedure following the recipes in Table 3, with all amounts given in phr. Standard amounts of curatives were also included. Rubber compounds were then cured and tested for rolling resistance (RR) and wet braking performance, with results given in Table 4.

**Table 3**

| Sample | Reference | Example 3 |
|---|---|---|
| SBR¹ | 60 | 49 |
| SBR² | 25 | 0 |
| SBR³ | 0 | 30 |
| Natural Rubber | 0 | 21 |
| cis-BR⁴ | 15 | 0 |
| Silica⁵ | 90 | 0 |
| Silica⁶ | 0 | 65 |
| Carbon Black | 5 | 0 |
| Silane⁷ | 7.2 | 5.2 |
| Silane⁸ | 0 | 2 |
| Traction resin⁹ | 10 | 0 |
| Liquid Polymer¹⁰ | 0 | 4 |
| TDAE oil¹¹ | 16.375 | 9 |
| Sunflower oil | 7 | 3 |

| | | |
|---|---|---|
| ¹ Solution polymerized SBR with styrene content of 21% and 1,2-vinyl content of 50%, Tg = -23°C obtained from Trinseo as SLR4602. ² Solution polymerized SBR with styrene content of 34% and 1,2-vinyl content of 38%, Tg = -28 °C extended with 37.5 phr TDAE oil, obtained as Tufdene E680 from JSR. ³ Solution polymerized SBR with styrene content of 30% and 1,2-vinyl content of 41 %, Tg = -22.4 °C extended with 20 phr TDAE oil, obtained as SLF30H41-66C from The Goodyear Tire & Rubber Company. ⁴ High cis polybutadiene, obtained as Budene 1207 from The Goodyear Tire & Rubber Company. ⁵ Ultrasil 6000 GR from Evonik. ⁶Zeosil Premium 200MP from Solvay ⁷S-octanoylmercaptopropyltriethoxysilane, as NXT* from Momentive ⁸ TESPD type silane coupling agent, 50% on carbon black as X50S from Evonik. ⁹ Copolymer of styrene and alpha-methylstyrene, Tg =+39°C, obtained as Sylvares SA85 from Arizona Chemicals. ¹⁰ Polybutadiene end functionalized with triethoxysilyl groups, Mw=3000, Tg = -35 C, as Ricon 603 from Cray Valley ¹¹ Includes extension oil and added oil | | |

**Table 4**

| | Reference | example |
|---|---|---|
| Hot rebound (100 °C) | 61 | 72 |
| Tan(delta) -10 °C, 6% strain | 1.180 | 1.195 |

As can be seen in Table 4, the overall compromise of wet braking (as indicated by Tan(delta) at -10 °C) and rolling resistance (as indicated by Hot Rebound) is improved with the compounds using alkoxysilyl-terminated polybutadiene.

## Claims

1. A pneumatic tire comprising a tread (110), the tread (110) comprising a radially outermost, ground contacting tread cap layer (140) and a tread base layer (170) disposed radially inward of and at least partially underlying the tread cap layer (140), the tread cap layer (140) comprising a central cap zone (150) and lateral cap zones (160), the lateral cap zones (160) being located axially adjacent to the central cap zone (150) and on axially opposite sides of the central cap zone (150), the central cap zone (150) comprising a first rubber composition and the lateral cap zones (160) comprising a second rubber composition,
the first rubber composition comprising a diene elastomer, silica, a blocked mercaptosilane, a resin, and a polybutadiene functionalized with a hydroxyl functional group, the polybutadiene having a weight average molecular weight (Mw) in a range of from 1000 to 25000 g/gmol; and
the second rubber composition comprising a diene elastomer, silica, a blocked mercaptosilane, and a polybutadiene functionalized with an alkoxysilane functional group, the polybutadiene having a weight average molecular weight (Mw) in a range of from 1000 to 25000 g/gmol;
wherein the weight average molecular weight (Mw) is measured according to ASTM 3536.

2. The pneumatic tire of claim 1, wherein the first rubber composition and second rubber composition each comprise as the diene elastomer (i) from 40 to 60 phr of a first styrene-butadiene rubber having a Tg in a range of from -70°C to -5°C and functionalized with a alkoxysilane group and sulfur containing functional group; (ii) from 20 to 30 phr of a second styrene-butadiene rubber containing from 25 to 45 percent by weight of styrene, a vinyl 1,2 content of 20 to 60 percent by weight based on the rubber weight, and having a Tg in a range of from -30°C to -5°C, and (iii) from 10 to 30 phr of a natural rubber or synthetic polyisoprene; wherein Tg is measured according to ASTM D7426.

3. The pneumatic tire of claim 1 or 2, wherein the first rubber composition and second rubber composition each comprise as the blocked mercaptosilane from 3 to 10 phr of S-octanoylmercaptopropyltriethoxysilane.

4. The pneumatic tire of at least one of the previous claims, wherein the polybutadiene functionalized with a hydroxyl functional group is present in an amount in a range of from 3 to 30 phr and/or has a Tg in a range of from -50°C to -20°C; wherein Tg is measured according to ASTM D7426.

5. The pneumatic tire of at least one of the previous claims, wherein the polybutadiene functionalized with an alkoxysilane functional group is present in an amount in a range of from 3 to 30 phr and/or has a Tg in a range of from -50°C to -20°C; wherein Tg is measured according to ASTM D7426.

6. The pneumatic tire of at least one of the previous claims, wherein the first rubber composition and second rubber composition each comprise from 50 to 100 phr of silica; and/or wherein the first rubber composition and second rubber composition each comprise from 1 to 10 phr of carbon black.

7. The pneumatic tire of at least one of the previous claims, wherein the first rubber composition includes as the resin from 3 to 10 phr of a resin selected from the group consisting of hydrocarbon resins, phenol/acetylene resins, rosin derived resins and mixtures thereof.

8. The pneumatic tire of at least one of the previous claims, wherein the central cap zone (150) is disposed axially symmetrically about a center line (C) axially bisecting the tread (110), and wherein two lateral cap zones (160) are disposed axially symmetrically with respect to each other about the center line (C).

9. The pneumatic tire of at least one of the previous claims 1 to 7, wherein the central cap zone (150) is disposed axially asymmetrically about a center line (C) axially bisecting the tread (110), and wherein two lateral cap zones (160) are disposed axially asymmetrically with respect to each other about the center line (C).

10. The pneumatic tire of at least one of the previous claims, wherein the lateral cap zones (160) comprise two shoulder regions and an undertread region underlying the central cap zone (150), the undertread region extending axially between and continuous with the shoulder regions, and wherein the undertread region is disposed radially between the tread base layer (170) and the central cap zone (150).

11. The pneumatic tire of claim 10, wherein the undertread region includes at least one notched area (280, 275) that extends radially outward into the central cap zone (150)

12. The pneumatic tire of at least one of the previous claims, wherein the first rubber composition further comprises a processing oil, and wherein the sum of the amount of the resin, the polybutadiene and the processing oil is in a range of from 10 to 45 phr.

13. The pneumatic tire of at least one of the previous claims, wherein the second rubber composition further comprises a processing oil, and the sum of the amount of the polybutadiene and the processing oil is in a range of from 10 to 45 phr.

14. The pneumatic tire of at least one of the previous claims, wherein the diene elastomer of at least one of the first and second rubber composition comprises a styrene-butadiene rubber functionalized with an alkoxysilane group and a functional group selected from sulfur containing functional groups and amino functional groups.

15. The pneumatic tire of at least one of the previous claims, wherein the polybutadiene functionalized with a hydroxyl functional group has a weight average molecular weight (Mw) in a range of from 1000 to 4000 g/gmol and is liquid; and/or wherein the polybutadiene functionalized with an alkoxysilane functional group has a weight average molecular weight (Mw) in a range of from 1000 to 4000 g/gmol and is liquid; wherein the weight average molecular weight (Mw) is measured according to ASTM 3536.

## Patentansprüche

1. Luftreifen, umfassend eine Lauffläche (110), wobei die Lauffläche (110) eine radial äußerste, den Boden berührende Laufflächenkronenschicht (140) und eine Laufflächenbasisschicht (170), die radial nach innen von der Laufflächenkronenschicht (140) angeordnet ist und wenigstens teilweise unter dieser liegt, umfasst, wobei die Laufflächenkronenschicht (140) einen mittleren Kronenbereich (150) und seitliche Kronenbereiche (160) umfasst, wobei die seitlichen Kronenbereiche (160) sich axial angrenzend an den mittleren Kronenbereich (150) und an axial gegenüberliegenden Seiten des mittleren Kronenbereichs (150) befinden, wobei der mittlere Kronenbereich (150) eine erste Kautschukzusammensetzung umfasst und die seitlichen Kronenbereiche (160) eine zweite Kautschukzusammensetzung umfassen,
wobei die erste Kautschukzusammensetzung ein Dienelastomer, Siliciumdioxid, ein blockiertes Mercaptosilan, ein Harz und ein mit einer hydroxylfunktionellen Gruppe funktionalisiertes Polybutadien umfasst, wobei das Polybutadien ein Massenmittel (*weight avergae molecular weight-* Mw) in einem Bereich von 1000 bis 25000 g/gmol aufweist; und
wobei die zweite Kautschukzusammensetzung ein Dienelastomer, Siliciumdioxid, ein blockiertes Mercaptosilan und ein mit einer alkoxysilanfunktionellen Gruppe funktionalisiertes Polybutadien umfasst, wobei das Polybutadien ein Massenmittel (Mw) in einem Bereich von 1000 bis 25000 g/gmol aufweist;
wobei das Massenmittel (Mw) gemäß ASTM 3536 gemessen wird.

2. Luftreifen nach Anspruch 1, wobei die erste Kautschukzusammensetzung und die zweite Kautschukzusammensetzung jeweils als das Dienelastomer Folgendes umfassen: (i) von 40 bis 60 phr eines ersten Styrol-Butadien-Kautschuks, der eine Tg in einem Bereich von -70 °C bis - 5 °C aufweist und mit einer Alkoxysilangruppe und einer schwefelhaltigen funktionellen Gruppe funktionalisiert ist; (ii) von 20 bis 30 phr eines zweiten Styrol-Butadien-Kautschuks, der von 25 bis 45 Gew.-% Styrol, einen Vinyl-1,2-Gehalt von 20 bis 60 Gew.-%, basierend auf dem Kautschukgewicht, enthält und eine Tg in einem Bereich von -30 °C bis -5 °C aufweist, und (iii) von 10 bis 30 phr eines Naturkautschuks oder synthetischen Polyisoprens; wobei die Tg gemäß ASTM D7426 gemessen wird.

3. Luftreifen nach Anspruch 1 oder 2, wobei die erste Kautschukzusammensetzung und die zweite Kautschukzusammensetzung jeweils von 3 bis 10 phr S-octanoylmercaptopropyltriethoxysilan als das blockierte Mercaptosilan umfassen.

4. Luftreifen nach einem der vorhergehenden Ansprüche, wobei das mit einer hydroxylfunktionellen Gruppe funktionalisierte Polybutadien in einer Menge in einem Bereich von 3 bis 30 phr vorhanden ist und/oder eine Tg in einem Bereich von -50 °C bis -20 °C aufweist; wobei die Tg gemäß ASTM D7426 gemessen wird.

5. Luftreifen nach einem der vorhergehenden Ansprüche, wobei das mit einer alkoxysilanfunktionellen Gruppe funktionalisierte Polybutadien in einer Menge in einem Bereich von 3 bis 30 phr vorhanden ist und/oder eine Tg in einem Bereich von -50 °C bis -20 °C aufweist; wobei die Tg gemäß ASTM D7426 gemessen wird.

6. Luftreifen nach einem der vorhergehenden Ansprüche, wobei die erste Kautschukzusammensetzung und die zweite Kautschukzusammensetzung jeweils 50 bis 100 phr Siliciumdioxid umfassen; und/oder wobei die erste Kautschukzusammensetzung und die zweite Kautschukzusammensetzung jeweils 1 bis 10 phr Industrieruß umfassen.

7. Luftreifen nach einem der vorhergehenden Ansprüche, wobei die erste Kautschukzusammensetzung von 3 bis 10 phr eines Harzes, das aus der Gruppe ausgewählt ist, die aus Kohlenwasserstoffharzen, Phenol/Acetylen-Harzen, Kolophonium-abgeleiteten Harzen und Gemischen davon besteht, als das Harz einschließt.

8. Luftreifen nach einem der vorhergehenden Ansprüche, wobei der mittlere Kronenbereich (150) axial symmetrisch um eine Mittellinie (C) herum angeordnet ist, die die Lauffläche (110) axial halbiert, und wobei die zwei seitlichen Kronenbereiche (160) axial symmetrisch bezüglich einander um die Mittellinie (C) herum angeordnet sind.

9. Luftreifen nach einem der vorhergehenden Ansprüche 1 bis 7, wobei der mittlere Kronenbereich (150) axial asymmetrisch um eine Mittellinie (C) herum angeordnet ist, die die Lauffläche (110) axial halbiert, und wobei die zwei seitlichen Kronenbereiche (160) axial asymmetrisch bezüglich einander um die Mittellinie (C) herum angeordnet sind.

10. Luftreifen nach einem der vorhergehenden Ansprüche, wobei die seitlichen Kronenbereiche (160) zwei Schulterregionen und eine Basisgummiregion, die unter dem mittleren Kronenbereich (150) liegt, umfassen, wobei die Basisgummiregion sich axial zwischen und kontinuierlich mit den Schulterregionen erstreckt und wobei die Basisgummiregion radial zwischen der Laufflächenbasisschicht (170) und dem mittleren Kronenbereich (150) angeordnet ist.

11. Luftreifen nach Anspruch 10, wobei die Basisgummiregion wenigstens eine gekerbte Zone (280, 275) einschließt, die sich radial nach außen in den mittleren Kronenbereich (150) erstreckt.

12. Luftreifen nach einem der vorhergehenden Ansprüche, wobei die erste Kautschukzusammensetzung ferner ein Weichmacheröl umfasst und wobei die Summe der Menge des Harzes, des Polybutadiens und des Weichmacheröls in einem Bereich von 10 bis 45 phr liegt.

13. Luftreifen nach einem der vorhergehenden Ansprüche, wobei die zweite Kautschukzusammensetzung ferner ein Weichmacheröl umfasst und wobei die Summe der Menge des Polybutadiens und des Weichmacheröls in einem Bereich von 10 bis 45 phr liegt.

14. Luftreifen nach einem der vorhergehenden Ansprüche, wobei das Dienelastomer der ersten und/oder der zweiten Kautschukzusammensetzung einen mit einer Alkoxysilangruppe funktionalisierten Styrol-Butadien-Kautschuk und eine funktionelle Gruppe, die aus schwefelhaltigen funktionellen Gruppen und aminofunktionellen Gruppen ausgewählt ist, umfasst.

15. Luftreifen nach einem der vorhergehenden Ansprüche, wobei das mit einer hydroxylfunktionellen Gruppe funktionalisierte Polybutadien ein Massenmittel (Mw) in einem Bereich von 1000 bis 4000 g/gmol aufweist und flüssig ist; und/oder wobei das mit einer Alkoxysilangruppe funktionalisierte Polybutadien ein Massenmittel (Mw) in einem Bereich von 1000 bis 4000 g/gmol aufweist und flüssig ist; wobei das Massenmittel (Mw) gemäß ASTM 3536 gemessen wird.

## Revendications

1. Bandage pneumatique comprenant une bande de roulement (110), la bande de roulement (110) comprenant une couche de sommet ou de revêtement (140) de la bande de roulement, qui entre en contact avec le sol et qui est la plus externe en direction radiale, et une couche de base (170) de la bande de roulement qui est disposée à l'intérieur en direction radiale et qui est au moins en partie sous-jacente à la couche de sommet (140) de la bande de roulement, la couche de sommet (140) de la bande de roulement comprenant une zone de sommet centrale (150) et des zones de sommet latérales (160), les zones de sommet latérales (160) étant disposées en direction axiale, en position adjacente par rapport à la zone de sommet centrale (150) et sur les côtés opposés en direction axiale de la zone de sommet centrale (150), la zone de sommet centrale (150) comprenant une première composition de caoutchouc et les zones de sommet latérales (160) comprenant une deuxième composition de caoutchouc ;
la première composition de caoutchouc comprenant un élastomère diénique, une silice, un mercaptosilane bloqué, une résine et un polybutadiène fonctionnalisé avec un groupe fonctionnel de type hydroxyle, le polybutadiène possédant un poids moléculaire moyen en poids (Mw) qui se situe dans une plage allant de 1.000 à 25.000 g/gmol ; et
la deuxième composition de caoutchouc comprenant un élastomère diénique, une silice, un mercaptosilane bloqué et un polybutadiène fonctionnalisé avec un groupe fonctionnel de type alcoxysilane, le polybutadiène possédant un poids moléculaire moyen en poids (Mw) qui se situe dans une plage allant de 1.000 à 25.000 g/gmol ;
dans lequel le poids moléculaire moyen en poids (Mw) est mesuré en conformité avec la norme ASTM 3536.

2. Bandage pneumatique selon la revendication 1, dans lequel la première composition de caoutchouc et la deuxième composition de caoutchouc comprennent chacune, à titre de l'élastomère diénique : (i) de 40 à 60 phr d'un premier caoutchouc de styrène-butadiène dont la valeur Tg se situe dans une plage allant de -70 °C à -5 °C et qui est fonctionnalisé avec un groupe alcoxysilane et avec un groupe fonctionnel contenant un ou plusieurs atomes de soufre ; (ii) de 20 à 30 phr d'un deuxième caoutchouc de styrène-butadiène qui contient de 25 à 45 % en poids de styrène, dont la teneur en groupe vinyle 1,2 s'élève de 20 à 60 % en poids, en se basant sur le poids du caoutchouc, et qui possède une valeur Tg qui se situe dans une plage allant de -30 °C à -5 °C ; et (iii) de 10 à 30 phr d'un caoutchouc naturel ou de polyisoprène synthétique ; dans lequel la valeur Tg est mesurée en conformité avec la norme ASTM D7426.

3. Bandage pneumatique selon la revendication 1 ou 2, dans lequel la première composition de caoutchouc et la deuxième composition de caoutchouc comprennent chacune, à titre du mercaptosilane bloqué, de 3 à 10 phr du S-octanoylmercatopropyltriéthoxysilane.

4. Bandage pneumatique selon au moins une des revendications précédentes, dans lequel le polybutadiène fonctionnalisé avec un groupe fonctionnel de type hydroxyle est présent en une quantité qui se situe dans une plage allant de 3 à 30 phr et/ou possède une valeur Tg qui se situe dans une plage allant de -50 °C à -20 °C ; dans lequel la valeur Tg est mesurée en conformité avec la norme ASTM D7426.

5. Bandage pneumatique selon au moins une des revendications précédentes, dans lequel le polybutadiène fonctionnalisé avec un groupe fonctionnel de type alcoxysilane est présent en une quantité qui se situe dans une plage allant de 3 à 30 phr et/ou possède une valeur Tg qui se situe dans une plage allant de -50 °C à -20 °C ; dans lequel la valeur Tg est mesurée en conformité avec la norme ASTM D7426.

6. Bandage pneumatique selon au moins une des revendications précédentes, dans lequel la première composition de caoutchouc et la deuxième composition de caoutchouc comprennent chacune de 50 à 100 phr de silice ; et/ou dans lequel la première composition de caoutchouc et la deuxième composition de caoutchouc comprennent chacune de 1 à 10 phr d'un noir de carbone.

7. Bandage pneumatique selon au moins une des revendications précédentes, dans lequel la première composition de caoutchouc englobe, à titre de résine, de 3 à 10 phr d'une résine choisie parmi le groupe constitué par des résines d'hydrocarbures, des résines de phénol/acétylène, des résines qui dérivent de la colophane, ainsi que leurs mélanges.

8. Bandage pneumatique selon au moins une des revendications précédentes, dans lequel la zone de sommet centrale (150) est disposée en direction axiale en position symétrique autour d'une ligne médiane (C) qui coupe en deux en direction axiale la bande de roulement (110) ; et dans lequel deux zones de sommet latérales (160) sont disposées en direction axiale en symétrie l'une par rapport à l'autre autour de la ligne médiane (C).

9. Bandage pneumatique selon au moins une des revendications précédentes 1 à 7, dans lequel la zone de sommet centrale (150) est disposée en direction axiale en position asymétrique autour d'une ligne médiane (C) qui coupe en deux en direction axiale la bande de roulement (110) ; et dans lequel deux zones de sommet latérales (160) sont disposées en direction axiale en asymétrie l'une par rapport à l'autre autour de la ligne médiane (C).

10. Bandage pneumatique selon au moins une des revendications précédentes, dans lequel les zones de sommet latérales (160) comprennent deux zones faisant office d'épaulements et une zone faisant office de sous-chape, qui est sous-jacente à la zone de sommet centrale (150), la zone faisant office de sous-chape s'étendant en direction axiale entre les zones faisant office d'épaulements et en continu avec les zones en question ; et dans lequel la zone faisant office de sous-couche est disposée en direction radiale entre la couche de base (170) de la bande de roulement et la zone de sommet centrale (150).

11. Bandage pneumatique selon la revendication 10, dans lequel la zone faisant office de sous-couche englobe au moins une zone munie d'une encoche (280, 275) qui s'étendant en direction radiale vers l'extérieur jusque dans la zone de sommet centrale (150).

12. Bandage pneumatique selon au moins une des revendications précédentes, dans lequel la première composition de caoutchouc comprend en outre une huile de traitement ; et dans lequel la somme des quantités de la résine, du polybutadiène et de l'huile de traitement se situe dans une plage allant de 10 à 45 phr.

13. Bandage pneumatique selon au moins une des revendications précédentes, dans lequel la deuxième composition de caoutchouc comprend en outre une huile de traitement ; et dans lequel la somme des quantités du polybutadiène et de l'huile de traitement se situe dans une plage allant de 10 à 45 phr.

14. Bandage pneumatique selon au moins une des revendications précédentes, dans lequel l'élastomère diénique d'au moins une composition de caoutchouc choisie parmi la première et la deuxième composition de caoutchouc, comprend un caoutchouc de styrène-butadiène fonctionnalisé avec un groupe alcoxysilane et avec un groupe fonctionnel choisi parmi des groupes fonctionnels contenant un ou plusieurs atomes de soufre et des groupes fonctionnels de type amino.

15. Bandage pneumatique selon au moins une des revendications précédentes, dans lequel le polybutadiène fonctionnalisé avec un groupe fonctionnel de type hydroxyle possède un poids moléculaire moyen en poids (Mw) qui se situe dans une plage de 1.000 à 4.000 g/gmol et est liquide ; et/ou dans lequel le polybutadiène fonctionnalisé avec un groupe fonctionnel de type alcoxysilane possède un poids moléculaire moyen en poids (Mw) qui se situe dans une plage de 1.000 à 4.000 g/gmol et est liquide ; dans lequel le poids moléculaire moyen en poids (Mw) est mesuré en conformité avec la norme ASTM 3536.
